(19)

Europäisches
Patentamt
European
Patent Office
Office européen
des brevets

(11) **EP 3 197 200 A1**

(12) **EUROPEAN PATENT APPLICATION**
published in accordance with Art. 153(4) EPC

(43) Date of publication:
26.07.2017 Bulletin 2017/30

(51) Int Cl.:
*H04W 24/10* (2009.01)

(21) Application number: 15837440.5

(22) Date of filing: 11.02.2015

(86) International application number:
PCT/CN2015/072790

(87) International publication number:
WO 2016/033946 (10.03.2016 Gazette 2016/10)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 02.09.2014 CN 201410444489

(71) Applicant: ZTE Corporation
Shenzhen, Guangdong 518057 (CN)

(72) Inventors:
• SU, Meng
 Shenzhen
 Guangdong 518057 (CN)
• SUN, Kaiwen
 Shenzhen
 Guangdong 518057 (CN)
• CHEN, Xiaowei
 Shenzhen
 Guangdong 518057 (CN)

(74) Representative: Brevalex
95, rue d'Amsterdam
75378 Paris Cedex 8 (FR)

(54) **IDENTIFICATION METHOD, DEVICE AND SYSTEM OF WCDMA NETWORK CELL SOFT HANDOVER BAND AND STORAGE MEDIUM**

(57) Disclosed is an identification method for a Wideband Code Division Multiple Access (WCDMA) network cell soft switching band. The method includes that: a data collection server performs positioning calculation of a mobile station according to Round Trip Time (RTT) data, collected by a Radio Network Controller (RNC), of each of cells in an active set, performs grid statistics according to a positioning calculation result, and stores a statistical result; and a client calculates and displays a soft switching band of a cell in an active set to be queried according to the statistical result corresponding to the cell. Also disclosed are a system corresponding to the method, a data collection server and a storage medium.

Fig. 1

```
┌─────────────────────────────────────────────┐
│ The data collection server performs          │
│ positioning calculation of a mobile station  │  101
│ according to Round Trip Time (RTT) data,      │
│ collected by a Radio Network Controller       │
│ (RNC), of each of cells in an active set,     │
│ performs gird statistics according to a       │
│ positioning calculation result, and stores a  │
│ statistical result                            │
└─────────────────────────────────────────────┘
                      │
                      ▼
┌─────────────────────────────────────────────┐
│ The client calculates and displays a soft     │
│ switching band of a cell to be queried in the │  102
│ active set according to the statistical result│
│ corresponding to the cell                     │
└─────────────────────────────────────────────┘
```

**EP 3 197 200 A1**

Description

## TECHNICAL FIELD

The disclosure relates to a soft switching technique in the field of mobile communications, and in particular to an identification method, device, and system for a Wideband Code Division Multiple Access (WCDMA) network cell soft switching band, and a storage medium.

## BACKGROUND

The WCDMA is a third generation of wireless communication technology specifically developed by the 3rd Generation Partnership Project (3GPP). The WCDMA technology is widely used. The 3G network of China's Unicom uses the WCDMA technology.

In a cellular mobile communication network, the coverage of the cell is limited, but the mobile station of the user may be in a continuously moving state. When a mobile station in a connected state moves from one cellular cell to another cellular cell, the network control system has to initiate a "switching" process to release the connection between the mobile station and the original cell, and establish a connection with a new cell, thereby maintaining the service transmission between the mobile station and the network, preventing the communication process from being abnormally interrupted.

The WCDMA system supports multiple types of switching, mainly including hard switching, soft switching and softer switching, wherein the soft switching refers to a channel switching between the cells with the same carrier frequency of the pilot channel. In the switching process, the mobile station maintains the communication links with the original base station and a new base station. Only when the mobile station establishes a stable communication in the new cell, the mobile station disconnects the connection with the original base station. Compared with the hard switching, the soft switching may effectively improve the switching reliability, and reduce call drops resulted from the switching failure. In the state of the soft switching, the mobile station maintains communication links with a plurality of cells which are called active set cells. According to the 3GPP protocol, the Radio Network Controller (referred to as RNC) may measure Round Trip Time (referred to as RTT) propagated by the wireless signal between the base station and the mobile station according to the active set cells.

In planning and daily optimization work for the cellular mobile communication network, the coverage of each cell is a very important consideration. Reasonable adjustment for the coverage of the cell may reasonably control the capacity of the cell, reduce the interference between users, reduce unnecessary switching, and improve communication performance and equipment utilization, so as to keep the quality of service of the network better and ensure the service experience of users.

In the conventional art, the identification method for the coverage of the cell usually has many problems so that the test workload is large, the identification accuracy is low, and the real-time performance is poor, resulting in poor practicability.

## SUMMARY

In order to solve the existing technical problems, the embodiments of the disclosure provide an identification method, device, and system for a WCDMA network cell soft switching band, and a storage medium.

The embodiments of the disclosure provide an identification method for a WCDMA network cell soft switching band, the method including that:

a data collection server performs positioning calculation of a mobile station according to RTT data, collected by a RNC, of each of cells in an active set, performs cell statistics according to a positioning calculation result, and stores a statistical result; and

a client calculates and displays a soft switching band of a cell to be queried in the active set according to the statistical result corresponding to the cell.

In one embodiment, the method further includes that: the RNC collects the RTT data of each of cells in an active set corresponding to a mobile station in a soft switching state through a base station, and records the RTT data.

When the cells in an active set include two cells, the positioning calculation includes:

drawing two arcs from two different base stations respectively, according to the RTT distances from the mobile station to the two different base stations to obtain two intersections; and

calculating included angles between connecting lines of the two intersections and the two different base stations and a corresponding cell azimuth angle, respectively, calculating a sum of two included angles corresponding to the same intersection, respectively, and taking an intersection corresponding to a smaller one in the sums of the included angles as a positioning point of the mobile station.

When the cells in the active set include three cells, the positioning calculation includes:

drawing three arcs from three different base stations, respectively, according to RTT distances from the mobile station to the three different base stations to obtain a total of six intersections in three pairs in which two intersections obtained by two intersecting arcs are in a pair; and

taking arithmetic mean values of the vertical and horizontal coordinates of the six intersections, respectively, to obtain a central point; calculating a point in the three pairs closer to the central point, respectively, to obtain three points; and then, taking arithmetic mean values of the vertical and horizontal coordinates of the three points to obtain the positioning calculation result.

The embodiments of the disclosure also provide an identification method for a WCDMA network cell soft switching band, the method including that:

a data collection server performs positioning calculation of a mobile station according to RTT data, collected by a RNC, of each of cells in an active set, performs cell statistics according to a positioning calculation result, and stores a statistical result; and

the statistical result is used for calculating and displaying, by a client, a soft switching band of a cell to be queried in the active set.

The embodiments of the disclosure also provide a storage medium including a set of instructions which, when executed, cause at least one processor to execute the identification method for a soft switching band implemented by the data collection server.

The embodiments of the disclosure also provide an identification system for a WCDMA network cell soft switching band, the system including: a data collection server and a client, wherein the data collection server includes a positioning module and a statistics module; and the client includes a calculation module and a displaying module.

The positioning module is arranged to perform positioning calculation of a mobile station according to RTT data, collected by a RNC, of each of cells in an active set.

The statistics module is arranged to perform grid statistics according to a positioning calculation result of the positioning module, and store a statistical result.

The calculation module is arranged to calculate a soft switching band of a cell to be queried in the active set according to the statistical result corresponding to the cell.

The displaying module is arranged to display the soft switching band of the cell calculated by the calculation module.

In one embodiment, the system further includes: RNC, including a collection module and a recording module.

The collection module is arranged to collect the RTT data of each of cells in an active set corresponding to a mobile station in a soft switching state through a base station.

The recording module is arranged to record the RTT data collected by the collection module.

When the cells in the active set include two cells, the positioning module is arranged to draw two arcs from two different base stations, respectively, according to RTT distances from the mobile station to the two different base stations to obtain two intersections; and calculate included angles between connecting lines of the two intersections and the two different base stations and a corresponding cell azimuth angle, respectively, calculate a sum of two included angles corresponding to the same intersection, respectively, and take an intersection corresponding to a smaller one in the sums of the included angles as a positioning point of the mobile station.

When the cells in the active set include three cells, the positioning module is arranged to draw three arcs from three different base stations, respectively, according to RTT distances from the mobile station to the three different base stations to obtain a total of six intersections in three pairs in which two intersections obtained by two intersecting arcs are in a pair; and take arithmetic mean values of the vertical and horizontal coordinates of the six intersections, respectively, to obtain a central point; calculate a point in the three pairs closer to the central point, respectively, to obtain three points; and then, take arithmetic mean values of the vertical and horizontal coordinates of the three points to obtain the positioning calculation result.

The embodiments of the disclosure also provide a data collection server including a positioning module and a statistics module.

The positioning module is arranged to perform positioning calculation of a mobile station according to RTT data, collected by a RNC, of each of cells in an active set.

The statistics module is arranged to perform grid statistics according to a positioning calculation result of the positioning module, and store a statistical result.

The statistical result is used for calculating and displaying, by a client, a soft switching band of a cell to be queried in the active set.

In the identification method, device, and system for a WCDMA network cell soft switching band, and the storage medium provided by the embodiments of the disclosure, the data collection server performs positioning calculation of a mobile station according to RTT data, collected by a RNC, of each of cells in an active set, performs grid statistics according to a positioning calculation result, and stores a statistical result; and a client calculates and displays a soft switching band of a cell to be queried in the active set according to the statistical result corresponding to the cell. The embodiments of the disclosure may better solve the soft switching band identification problem in the WCDMA network, may view the distribution of the soft switching band among the cells intuitively, and may characterize the coverage of the cells to a great extent. The method is based on the actual data generated by the actual operation in the present network, having high degree of automation, good real-time performance, high accuracy, and strong practicality, thereby providing great help for the planning, adjustment and optimization work of the network.

## BRIEF DESCRIPTION OF THE DRAWINGS

In the drawings which are not necessarily drawn to scale, like reference numerals may be used to describe like components in different views. Similar reference numerals with different letter suffixes may represent different examples of similar components. The drawings illustrate, by way of example, and not limitation, the various embodiments discussed herein in general.

Fig. 1 is an implementing flow chart of an identification method for a WCDMA network cell soft switching band according to an embodiment of the disclosure.

Fig. 2 is a schematic diagram of a system connection mode according to an embodiment of the disclosure.

Fig. 3 is a service process flow chart according to the embodiment in Fig. 2.

Fig. 4 is a schematic diagram of a two-point positioning for a mobile station based on two base stations according to an embodiment of the disclosure.

Fig. 5 is a schematic diagram of a three-point positioning for a mobile station based on three base stations according to an embodiment of the disclosure.

Fig. 6 is a schematic diagram of the setting of the geographically displayed occupancy ratio segment.

Fig. 7 is a schematic diagram of a two-point positioning for a mobile station based on two base stations according to an application scenario of the disclosure.

Fig. 8 is a schematic diagram of a three-point positioning for a mobile station based on three base stations according to an application scenario of the disclosure.

Fig. 9 is a schematic diagram of grid division according to an application scenario of the disclosure.

Fig. 10 is a schematic diagram of a soft switching band interface display effect according to an application scenario of the disclosure.

Fig. 11 is a structure schematic diagram of a system according to an embodiment of the disclosure.

## DETAILED DESCRIPTION

The existing identification methods for cell coverage may include:

1. the network simulation calculation. The simulation calculation is performed according to a certain propagation model based on geographical position of the network base station, the orientation of the cell, geographic information and so on. It is very difficult for this theoretical calculation method to fully accurately reflect the actual situation, so that it is generally only applicable to the initial network planning before the network is established.

2. the geometric calculation. It is estimated according to the position relationship of adjacent base stations. In general, a "Thiessen polygon" method or its deformation is used to achieve the division of the coverage of the cell in a geometric sense. This method only considers the position of the base station, but the complex propagation environment factors, and the station type, the transmission power, the azimuth angle or other factors of the base station are not considered, so that it is low in accuracy and poor in practicability and may only be used to provide a schematic diagram.

3. the road test or fixed-point test. A test device is used to conduct a large number of sampling tests on site in the actual environment, collect the actual latitude and longitude and network measurement data on site, and obtain the coverage of each cell after a smooth calculation. However, in this method, the testing workload is very large, and it is very difficult to perform a test for the whole network due to large coverage. The measured data of a point may only reflect the situation at that time, but the wireless communication environment always dynamically changes. For example, there may be a big difference between the busy time and the idle time. The mobile communication network itself is constantly optimized and adjusted, so this method has not only large workload, but also has poor real-time performance and limited practicality.

In an embodiment of the disclosure, the data collection server performs positioning calculation of a mobile station according to RTT data, collected by a RNC, of each of cells in an active set, performs grid statistics according to a positioning calculation result, and stores a statistical result; and the client calculates and displays a soft switching band of a cell according to the statistical result corresponding to the cell to be queried in the active set.

In one embodiment, the method of the embodiment further includes that the RNC collects the RTT data of each of cells in an active set corresponding to a mobile station in a soft switching state through a base station, and records the RTT data.

Herein, the soft switching band is a geographical area in which the soft switching event frequently occurs in the WCDMA network and the RTT data includes an RTT data of each of the cells in the active set and an RTT parameter of the mobile station.

The disclosure will now be described in further detail with reference to the accompanying drawings and specific embodiments.

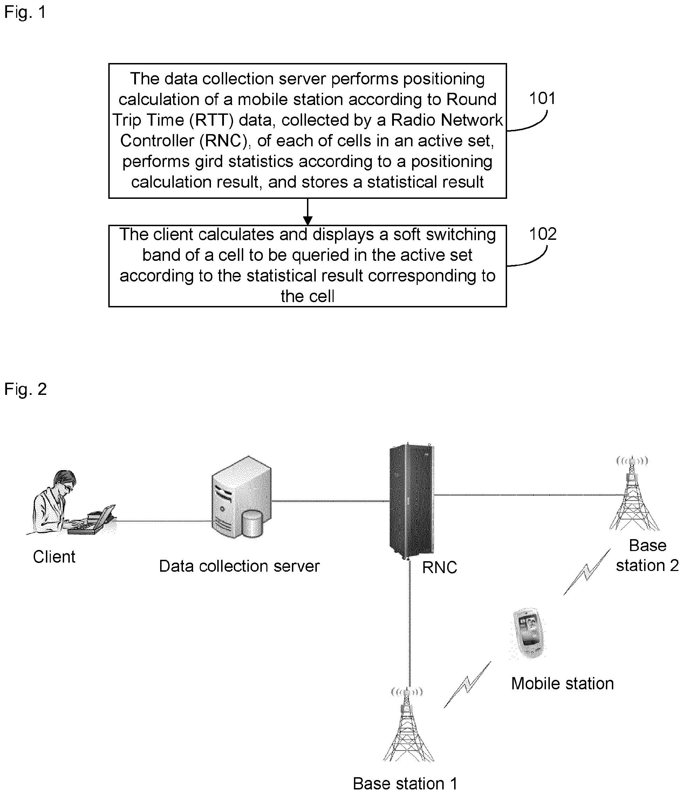

Fig. 1 is an implementing flow chart of an identification method for a WCDMA network cell soft switching band according to an embodiment of the disclosure. As shown in Fig. 1, the method includes the following steps.

At Step 101, the data collection server performs positioning calculation of a mobile station according to RTT data, collected by a RNC, each of cells in an active set, performs grid statistics according to a positioning calculation result, and stores a statistical result.

At Step 102, the client calculates and displays a soft switching band of a cell according to the statistical result corresponding to the cell to be queried in the active set.

In an embodiment of the disclosure, Step 101 may include that:

the data collection server downloads the RTT data, collected by a RNC, of each of cells in the active set, and the RTT parameter of the mobile station from the RNC, performs positioning calculation of the mobile station according to the RTT data of each of cells in the active set and the RTT parameter of the mobile station, performs grid statistics according to a positioning calculation result, and stores a statistical result in the database.

Here, the data collection server may automatically download the RTT data of each of cells in the active set and the RTT parameter of the mobile station from the RNC at regular intervals, for example, every five minutes.

In an embodiment of the disclosure, Step 102 may include that:

the client may query the grid statistical result stored in the database according to the query conditions, set by the operator, corresponding to a cell to be queried in the active set, such as the start time and end time of the statistical analysis, the network element condition to be analyzed, and so on, count the number of soft switching points of the cell to be queried in the active set, and calculate the number occupancy ratio of soft switching points in the grid and all soft switching points in the cell; and display the soft switching band of the cell on the map per the grid according to the relationship between the set occupancy ratio and the display color of the area, in which one of the soft switching points may correspond to one grid.

In one embodiment, prior to Step 101, the method of the embodiment further includes that:

the RNC collects the RTT data of each of cells in an active set corresponding to a mobile station in a soft switching state through a base station and records the RTT data, which specifically includes that:

when the mobile station is in the soft switching state, the RNC sends an instruction to each of the base stations to carry out the RTT measurement with respect to the mobile station; each of the base station initiates the RTT measurement after receiving the instruction and sends the RTT signal to the mobile station; after receiving the RTT measurement data returned by the mobile station, each of the base station calculates the data to obtain the RTT data of each of cells in an active set and the RTT parameter of the mobile station, and reports the RTT data and the RTT parameter to the RNC so that the RNC records them.

Alternatively, in one embodiment of the disclosure, the RNC may also perform RTT measurements to all the mobile stations in the connected state at regular intervals, for example, every eight seconds, and record the RTT data of each of cells in an active set related to the mobile stations in the soft switching state and the RTT parameters of the mobile stations.

The embodiments of the disclosure also provide an identification method for a WCDMA network cell soft switching band, the method including that:

the data collection server performs positioning calculation of a mobile station according to RTT data, collected by a RNC, of each of cells in an active set, performs grid statistics according to a positioning calculation result, and stores a statistical result; wherein the statistical result is used for calculating and displaying, by a client, a soft switching band of a cell to be queried in the active set.

For example, the data collection server downloads the RTT data, collected by a RNC, of each of cells in an active set, and the RTT parameter of the mobile station from the RNC, performs positioning calculation of the mobile station according to the RTT data of each of cells in an active set and the RTT parameter of the mobile station, performs grid statistics according to the positioning calculation result, and stores a statistical result in the database.

Here, the data collection server may automatically download the RTT data of each of cells in an active set and the RTT parameter of the mobile station from the RNC at regular intervals.

The embodiments of the disclosure also provide a storage medium including a set of instructions which, when executed, cause at least one processor to execute the identification method for a soft switching band implemented by the data collection server.

The disclosure will now be described in detail with reference to specific embodiments.

Fig. 2 is a schematic diagram of a system connection mode according to an embodiment of the disclosure. As shown in Fig. 2, the mobile station has radio link connections with the base station 1 and the base station 2, respectively, and each of the base station 1 and the base station 2 has a telecommunication transmission line with the RNC. The RNC has an Ethernet connection with the data collection server, and the data collection server has an Ethernet connection with the client. The cells corresponding to the base station 1 and the base station 2 are cells in an active set.

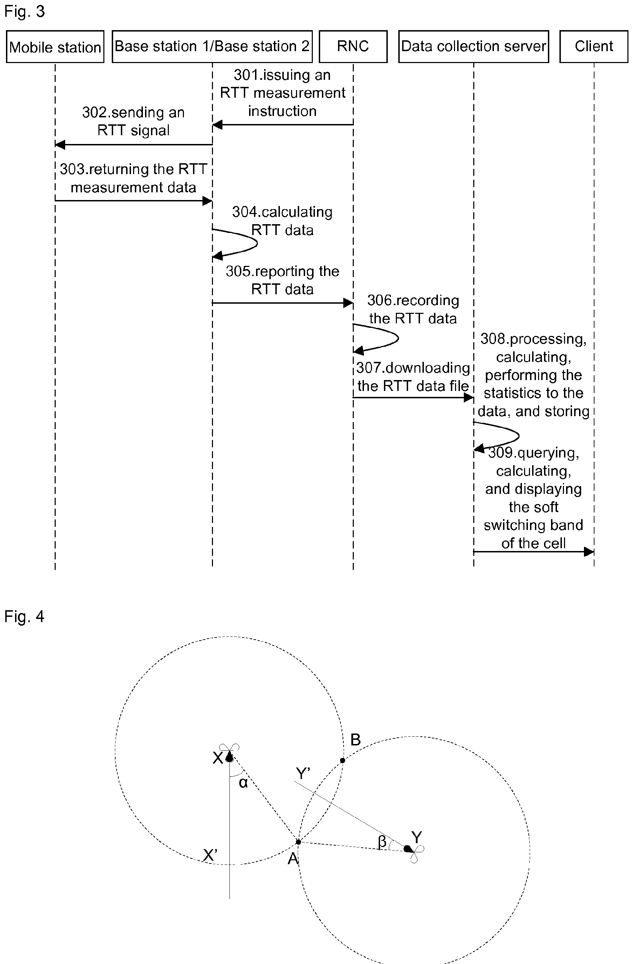

The service process flow according to the embodiment of the disclosure will be described below with reference to the application scenario in Fig. 2. As shown in Fig. 3, the service process flow includes the following steps.

Step 301: When the mobile station is in the connected state, the RNC issues an RTT measurement instruction for the mobile station to the base stations 1 and 2, respectively.

Step 302: Each of the base stations initiates an RTT measurement, and sends an RTT signal to the mobile station.

Step 303: The mobile station returns the RTT measurement data.

Step 304: Each of the base station calculates RTT data such as RTT time corresponding to respective cell according to the RTT measurement data.

Step 305: Each of the base station reports the RTT data such as RTT time and RTT parameter of the mobile station to the RNC.

Step 306: The RNC records the RTT data of the mobile station into a file.

Step 307: The data collection server automatically downloads the RTT data file at regular intervals.

Step 308: The data collection server processes the downloaded RTT data, calculates the geographical location of the mobile station, performs the statistics per the grid, and stores the statistical result in the database.

Step 309: After operating through the client and setting the query condition, the operator queries the statistical results, calculates to obtain the soft switching band data of the required cell, and performs the interface display through the Geographic Information System (GIS) map.

The methods for the positioning calculation of the mobile station according to the embodiments of the disclosure will be described below.

Embodiment 1

The present embodiment takes two base stations as an example. That is, two points are used for positioning a mobile station. Fig. 4 is a schematic diagram of the two-point positioning. As shown in Fig. 4, when the mobile station is connected with two different base stations by radio links, respectively, two arcs may be drawn from the two different base stations according to the RTT distances from the mobile station to the two different base stations to obtain the intersections A, B as the positioning points. The included angles between the connecting lines of the two intersections and the different base stations and the corresponding cell azimuth angle are calculated, respectively, the sum of two included angles corresponding to the same intersection is calculated, and the intersection corresponding to the smaller result in the sums of the included angles is taken as the positioning point of the mobile station. The azimuth angle refers to the angle at which the plane in the north direction is rotated clockwise to coincide with the plane where the antenna is located. The cell azimuth angle refers to the direction of the main lobe of the cell. Specifically, the included angles between the two intersections and the two cell azimuth angles are calculated, respectively. Since the cell corresponding to the base station usually has a sector structure, as shown by the two fan-shaped areas in Fig. 4. If the cell azimuth angles are the angular bisectors XX' and YY' of the sector areas of the cells, the included angles between the two positioning points and the cell azimuth angles are the included angles between the connecting lines of the positioning points and the base stations and the cell azimuth angles corresponding to the base stations, respectively, and the positioning point of the mobile station is finally the positioning point corresponding to the smaller one in the sums of the included angles between the two positioning points A and B and the cell azimuth angles, respectively. In the present embodiment, as shown in Fig. 4, the sum of $\angle\alpha$ and $\angle\beta$ in the figure is smaller, and correspondingly, the positioning point of the mobile station is point A in Fig. 4.

Embodiment 2

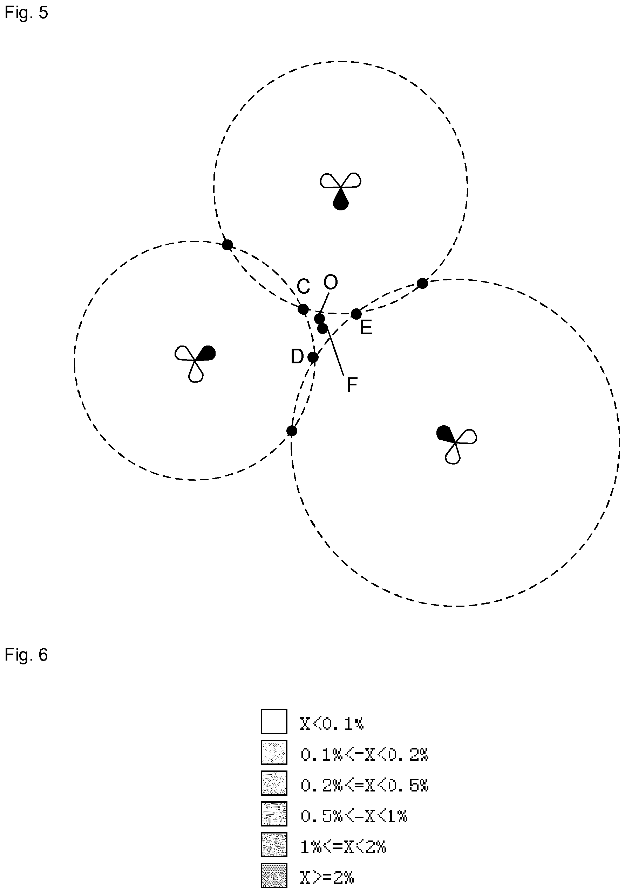

The present embodiment takes three base stations as an example. That is, the three points are used for positioning a mobile station. Fig. 5 is a schematic diagram of the three-point positioning. As shown in Fig. 5, when the mobile station is connected with three different base stations by radio links, respectively, three arcs are drawn from three different base stations according to the RTT distances from the mobile station to the three different base stations to obtain a total of six intersections in three pairs in which two intersections obtained by two intersecting arcs are in a pair. The arithmetic mean values of the vertical and horizontal coordinates of the positioned six intersections are taken, respectively, to find a central point, such as point O shown in the figure. A point in the three pairs closer to the central point is calculated, respectively, to obtain three points, i.e., point C, point D and point E. Then, the arithmetic mean values of the vertical and horizontal coordinates of the three points are taken, respectively, to obtain a positioning result, namely, point F shown in the figure. It is noted that, in theory, if the RTT distance is absolutely accurate compared with the actual distance, the three arcs in the three-point positioning may be intersected at one point. However, in practice, there is always a certain error in the measured value, and it is impossible for the RTT distance to be absolutely accurate. Therefore, the above method is used for estimation.

The relationship between the above-mentioned occupancy ratio and the area display color is briefly described herein with reference to the accompanying drawings. Fig. 6 is a schematic diagram of the setting of the geographically displayed occupancy ratio segment. As shown in Fig. 6, the operator may voluntarily set the number of segments of the grid, the index threshold of each segment and the displayed color value as required. The segmentation index is the occupancy ratio of the number of soft switching points in a certain grid in a certain cell and all the soft switching points in the cell. For example, it may be set as not displaying if the occupancy ratio is 0.1% or less, displaying in different colors in four segments if the occupancy ratio is from 0.1% to 2%, and displaying in different colors if the occupancy ratio is more than 2%.

The method of the embodiments of the disclosure will be described in detail below with reference to a specific application scenario.

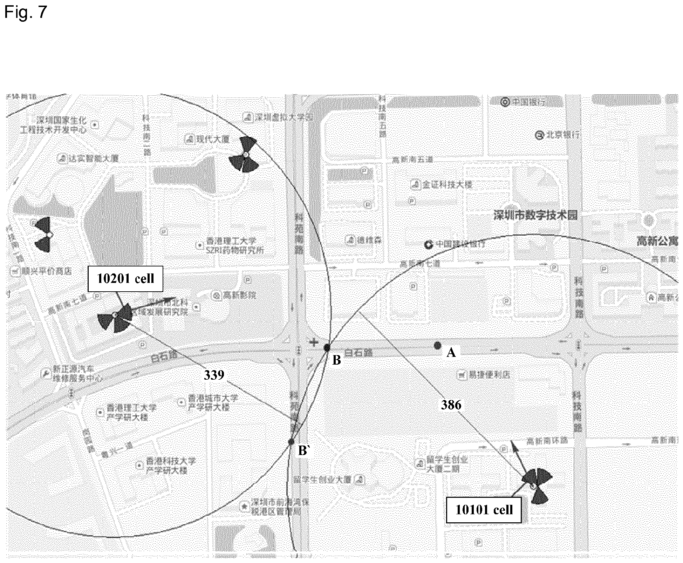

The voice call service of a WCDMA user is taken as an example. As shown in Fig. 7, there are two adjacent cells with cell IDs being 10101 and 10201, respectively. For the cell 10101, the latitude and longitude of the cell antenna are (113.944375, 22.53384), and for the cell 10201, the latitude and longitude of the cell antenna are (113.938013, 22.536213).

The user moves from point A to the west along the road, and starts receiving a call at point A, and the service cell is the cell 10101. When the user moves to point B, a soft switching occurs and the cell 10201 is added to the active set. At this time, the RNC initiates the RTT measurement, and the measurement results are shown in the following table.

| Cell ID | RTT | RxTxTimeDiffType |
|---------|-----|------------------|
| 10101 | 2494 | 1022 |

(continued)

| Cell ID | RTT | RxTxTimeDiffType |
|---------|------|------------------|
| 10201 | 4171 | 1128 |

The RTT field and the RxTxTimeDiffType field described in the table are the reported values specified in the agreement without a unit. The distance between the mobile station and the base station is calculated with the RTT distance calculation formula. The formula is as follows:

$$\text{Distance} = (\text{RTT} \div 16 + 876 - \text{RxTxTimeDiffType}) \times 78.125 \div 2$$

By the calculation, it can be seen that the distance between the user and the cell 10101 is about 385.74 meters, and the distance between the user and the cell 10201 is about 339.36 meters.

As shown in Fig. 7, by taking the cell 10101 as the center and 385.74 meters as the radius, and the cell 10201 as the center, and 339.36 meters as the radius, respectively, two arcs are drawn, and the intersections of the two arcs are calculated to obtain two intersections B and B'. The sums of the included angles between the two intersections B and B' and the two cell azimuth angles are calculated, respectively. The sum of the included angles for B is smaller, and thus the point B has larger possibility. Therefore, the positioning result is determined as point B.

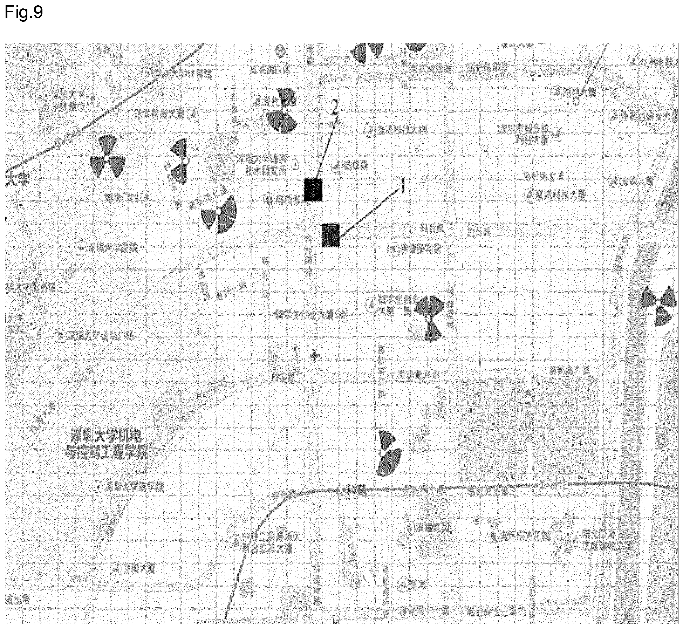

According to the grid division in Fig. 9, point B is located in the grid 1 in the figure. Therefore, it is counted per grid 1. For the grid, the soft switching point is recorded once in the cell 10101 and the cell 10201, respectively. Here, the entire map may be divided into a number of grids, such as grids of 50 m x 50 m, and then the positioning results may be counted and displayed per the grids.

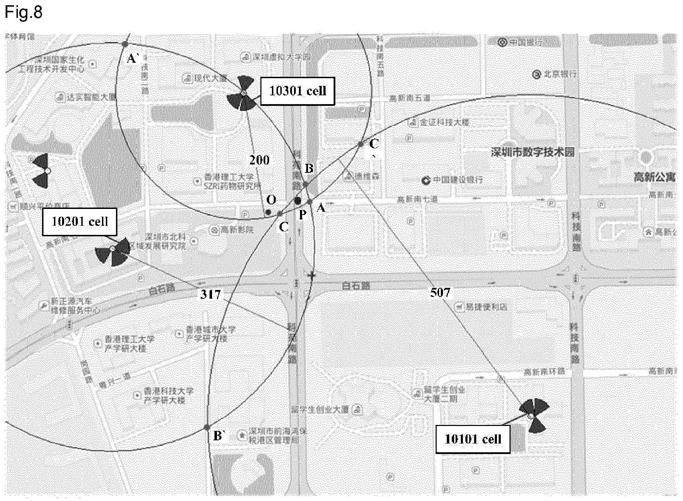

As shown in Fig. 8, if the user turns northward at the crossing. After a distance, the cell 10301 with the latitude and longitude of the cell antenna (113.939998, 22.538413) is added to the active set. At this time, the RNC initiates the RTT measurement, and the measurement results are shown in the following table.

| Cell ID | RTT | RxTxTimeDiffType |
|---------|------|------------------|
| 10101 | 2544 | 1022 |
| 10201 | 4162 | 1128 |
| 10301 | 4194 | 1133 |

According to the RTT distance calculation formula, it may be calculated that the mobile station is about 507.81 meters from the cell 10101, about 317.38 meters from the cell 10201 and about 200.20 meters from the cell 10301. Using the three-point positioning, arcs are drawn for the three cells. Three arcs intersect with each other, resulting in three pairs of intersections. The latitude and longitude results of these intersections are calculated as follows.

| Intersections | Longitude | Latitude |
|---------------|------------|-----------|
| A | 113.941006 | 22.536877 |
| A' | 113.938174 | 22.539097 |
| B | 113.940952 | 22.537085 |
| B' | 113.939450 | 22.533696 |
| C | 113.940555 | 22.536689 |
| C' | 113.941789 | 22.537700 |

The mean value of the longitudes and the mean value of the latitudes of the six intersections are calculated, with the result as (113.940321, 22.536857), that is, point O in Fig. 8. A point closer to point O is selected from the three pairs of intersections of A/A', B/B', and C/C', respectively, so as to obtain three points, A, B, C. The mean value of the longitudes and the mean value of the latitudes of the three points of A, B and C are calculated, with the result as (113.940838, 22.536834), that is, point P in Fig. 8.

According to the grid division in Fig. 9, point P is located in the grid 2 in the figure. Therefore, it is counted per grid 2. For the grid, the soft switching point is recorded once in the cell 10101, the cell 10201 and the cell 10301, respectively.

Similar to the above process, after all the RTT data of all of mobile stations are subjected to the position calculation and the statistics according to the grids, the statistical result of the number of soft switching points in different grids in various cells may be obtained, as shown in the following table.

| Times      Grid  Cell | Grid (1,1) | Grid (1,2) | …… | Grid (2,1) | Grid (2,2) | …… |
|---|---|---|---|---|---|---|
| Cell 10101 | 30 | 19 | …… | 12 | 0 | …… |
| Cell 10102 | 18 | 3 | …… | 29 | 31 | …… |
| …… | …… | …… | …… | …… | …… | …… |
| Cell 10201 | 26 | 32 | …… | 12 | 16 | …… |
| Cell 10202 | 18 | 2 | …… | 26 | 22 | …… |
| …… | …… | …… | …… | …… | …… | …… |

The statistics data of times of soft switching of the above-mentioned "cell + grid" granularity is written into the database, and is stored by the hour.

After that, the operator may select the base station to be analyzed through the client software interface, set start time and end time for the statistics, obtain the soft switching points of the base station in different grids by querying at the client, and calculate the summing value of the soft switching points in different grids to obtain the total number of soft switching points for the base station.

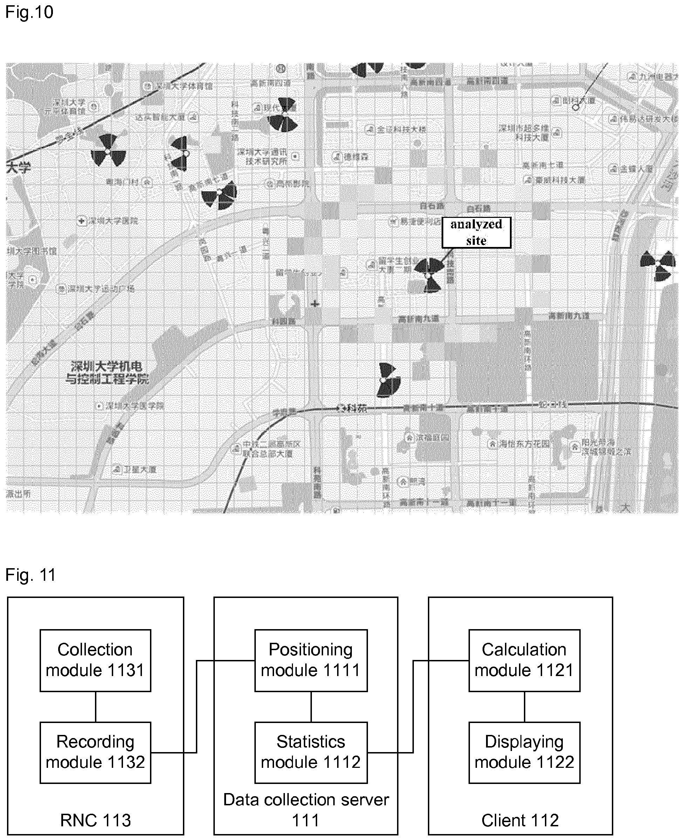

The occupancy ratio (percentage) of the number of soft switching points of each grid may be calculated by dividing the number of soft switching points of different grids by the total number of soft switching points, respectively. The grid may be rendered on the electronic map according to the color set by the displaying segment according to the occupancy ratio of the number of soft switching points of each grid, so as to draw the soft switching band of the base station, as shown in Fig. 10.

Similarly, the operator may select a cell, multiple cells, or multiple base stations to perform statistics to see the soft switching band distribution for different levels or different numbers of network elements.

Based on the above process, the operator may understand the actual distribution of the soft switching band in the present network intuitively, so as to grasp the coverage of the cell, and provide reference for the planning and adjustment of the network base station layout and the neighborhood relation and wireless parameter optimization, etc.

The embodiments of the disclosure also provide an identification system for a WCDMA network cell soft switching band. As shown in Fig. 11, the system includes: a data collection server 111 and a client 112, wherein the data collection server includes a positioning module 1111 and a statistics module 1112; and the client includes a calculation module 1121 and a displaying module 1122.

The positioning module 1111 is arranged to perform positioning calculation of a mobile station according to RTT data, collected by a RNC, of each of cells in an active set.

The statistics module 1112 is arranged to perform grid statistics according to a positioning calculation result of the positioning module 1111, and store a statistical result.

The calculation module 1121 is arranged to calculate a soft switching band of a cell according to the statistical result corresponding to the cell of an active set to be queried.

The displaying module 1122 is arranged to display the soft switching band of the cell calculated by the calculation module 1121.

The positioning module 1111 and the statistics module 1112 may be implemented by a Central Processing Unit (CPU), a Digital Signal Processor (DSP), or a Field - Programmable Gate Array (FPGA) in the data collection server 111.

The computing module 1121 and the displaying module 1122 may be implemented by the CPU, the DSP, or the FPGA in the client 112.

In one embodiment, the system in the embodiment of the disclosure further includes: RNC 113 including a collection module 1131 and a recording module 1132.

The collection module 1131 is arranged to collect the RTT data of each of cells in an active set corresponding to a mobile station in a soft switching state through a base station.

The recording module 1132 is arranged to record the RTT data collected by the collection module.

The collection module 1131 and the recording module 1132 may be implemented by the CPU, the DSP, or the FPGA in the RNC 113.

In one embodiment, in an embodiment of the disclosure, when the cells in the active set include two cells, the positioning module 1111 is arranged to draw two arcs from the two different base stations according to the RTT distances from the mobile station to the two different base stations to obtain two intersections; and calculate the included angles between the connecting lines of the two intersections and different base stations and the corresponding cell azimuth angle, respectively, calculate the sum of two included angles corresponding to the same intersection, and take the intersection corresponding to the smaller result in the sums of the included angles as a positioning point of the mobile station.

In one embodiment, in an embodiment of the disclosure, when the cells in the active set include three cells, the positioning module 1111 is arranged to draw three arcs from three different base stations respectively, according to the RTT distances from the mobile station to the three different base stations to obtain a total of six intersections in three pairs in which two intersections obtained by two intersecting arcs are in a pair; and take arithmetic mean values of the vertical and horizontal coordinates of the six intersections, respectively, to obtain a central point; calculate a point in the three pairs closer to the central point, respectively, to obtain three points; and then, take arithmetic mean values of the vertical and horizontal coordinates of the three points to obtain the positioning result.

The embodiments of the disclosure also provide a data collection server. As shown in Fig. 11, the data collection server includes a positioning module 1111 and a statistics module 1112.

The positioning module 1111 is arranged to perform positioning calculation of a mobile station according to RTT data, collected by a RNC, of each of cells in an active set.

The statistics module 1112 is arranged to perform grid statistics according to a positioning calculation result of the positioning module 1111, and store a statistical result.

The statistical result is used for calculating and displaying, by a client, a soft switching band of a cell in an active set to be queried.

The embodiments of the disclosure may better solve the soft switching band identification problem in the WCDMA network, may view the distribution of the soft switching band among the cells intuitively, and may characterize the coverage of the cells to a great extent. The method is based on the actual data generated by the actual operation in the present network, having high degree of automation, good real-time performance, high accuracy, and strong practicality, thereby providing great help for the planning, adjustment and optimization work of the network.

Those skilled in the art should understand that the embodiments of the disclosure may provide a method, a system or a computer program product. Thus, hardware, software or a combination thereof may be adopted in the disclosure. Moreover, the computer program product implemented on one or more computer available storage media (including, but not limited to, a disk memory, an optical memory and the like) containing computer available program codes may be adopted in the disclosure.

The disclosure is described with reference to flowcharts and/or block diagrams of the method, the equipment (system) and the computer program product according to the embodiments of the disclosure. It should be understood that each flow and/or block in the flowcharts and/or the block diagrams and a combination of the flows and/or the blocks in the flowcharts and/or the block diagrams may be realized by computer program instructions. These computer program instructions may be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions may also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

The foregoing is intended only as the preferred embodiments of the disclosure and is not intended to limit the scope of protection of the disclosure.

**Claims**

1. An identification method for a Wideband Code Division Multiple Access (WCDMA) network cell soft switching band, the method comprising:

   performing, by a data collection server, positioning calculation of a mobile station according to Round Trip Time (RTT) data, collected by a Radio Network Controller (RNC), of each of cells in an active set, performing grid statistics according to a positioning calculation result, and storing a statistical result; and
   calculating and displaying, by a client, a soft switching band of a cell to be queried in the active set according to the statistical result corresponding to the cell.

2. The method according to claim 1, further comprising:

   collecting, by the RNC, the RTT data of each of cells in an active set corresponding to a mobile station in a soft switching state through a base station, and recording the RTT data.

3. The method according to claim 1 or 2, wherein when the cells in the active set comprise two cells, performing the positioning calculation comprises:

   drawing two arcs from two different base stations, respectively, according to RTT distances from the mobile station to the two different base stations to obtain two intersections; and
   calculating included angles between connecting lines of the two intersections and the two different base stations and a corresponding cell azimuth angle, respectively, calculating a sum of two included angles corresponding to the same intersection, respectively, and taking an intersection corresponding to a smaller one in the sums of the included angles as a positioning point of the mobile station.

4. The method according to claim 1 or 2, wherein when the cells in the active set comprise three cells, performing the positioning calculation comprises:

   drawing three arcs from three different base stations, respectively, according to RTT distances from the mobile station to the three different base stations to obtain a total of six intersections in three pairs in which two intersections obtained by two intersecting arcs are in a pair; and
   taking arithmetic mean values of the vertical and horizontal coordinates of the six intersections, respectively, to obtain a central point; calculating a point in the three pairs closer to the central point, respectively, to obtain three points; and then, taking arithmetic mean values of the vertical and horizontal coordinates of the three points to obtain the positioning calculation result.

5. An identification method for a Wideband Code Division Multiple Access (WCDMA) network cell soft switching band, the method comprising:

   performing, by a data collection server, positioning calculation of a mobile station according to Round Trip Time (RTT) data, collected by a Radio Network Controller (RNC), of each of cells in an active set, performing cell statistics according to a positioning calculation result, and storing a statistical result,
   wherein the statistical result is used for calculating and displaying, by a client, a soft switching band of a cell to be queried in the active set.

6. An identification system for a Wideband Code Division Multiple Access (WCDMA) network cell soft switching band, comprising: a data collection server and a client, wherein the data collection server comprises a positioning module and a statistics module; and the client comprises a calculation module and a displaying module,
   wherein the positioning module is arranged to perform positioning calculation of a mobile station according to Round Trip Time (RTT) data, collected by a Radio Network Controller (RNC), of each of cells in an active set;
   the statistics module is arranged to perform grid statistics according to a positioning calculation result of the positioning module, and store a statistical result;
   the calculation module is arranged to calculate a soft switching band of a cell to be queried in the active set according to the statistical result corresponding to the cell; and
the displaying module is arranged to display the soft switching band of the cell calculated by the calculation module.

7. The system according to claim 6, further comprising: RNC comprising a collection module and a recording module,
wherein the collection module is arranged to collect the RTT data of each of cells in an active set corresponding to
a mobile station in a soft switching state through a base station; and
the recording module is arranged to record the RTT data collected by the collection module.

8. The system according to claim 6 or 7, wherein when the cells in the active set comprise two cells,
the positioning module is arranged to draw two arcs from two different base stations, respectively, according to RTT
distances from the mobile station to the two different base stations to obtain two intersections; and
calculate included angles between connecting lines of the two intersections and the two different base stations and
a corresponding cell azimuth angle, respectively, calculate a sum of two included angles corresponding to the same
intersection, respectively, and take an intersection corresponding to a smaller one in the sums of the included angles
as a positioning point of the mobile station.

9. The system according to claim 6 or 7, wherein when the cells in the active set comprise three cells,
the positioning module is arranged to draw three arcs from three different base stations, respectively, according to
RTT distances from the mobile station to the three different base stations to obtain a total of six intersections in
three pairs in which two intersections obtained by two intersecting arcs are in a pair; and
take arithmetic mean values of the vertical and horizontal coordinates of the six intersections, respectively, to obtain
a central point; calculate a point in the three pairs closer to the central point, respectively, to obtain three points;
and then, take arithmetic mean values of the vertical and horizontal coordinates of the three points to obtain the
positioning calculation result.

10. A data collection server, comprising a positioning module and a statistics module,
wherein the positioning module is arranged to perform positioning calculation of a mobile station according to Round
Trip Time (RTT) data, collected by a Radio Network Controller (RNC), of each of cells in an active set,
the statistics module is arranged to perform grid statistics according to a positioning calculation result of the positioning
module, and store a statistical result,
the statistical result is used for calculating and displaying, by a client, a soft switching band of a cell to be queried
in the active set.

11. A storage medium comprising a set of instructions which, when executed, cause at least one processor to execute
the method according to claim 5.

Fig. 1

| The data collection server performs positioning calculation of a mobile station according to Round Trip Time (RTT) data, collected by a Radio Network Controller (RNC), of each of cells in an active set, performs gird statistics according to a positioning calculation result, and stores a statistical result | 101 |

| The client calculates and displays a soft switching band of a cell to be queried in the active set according to the statistical result corresponding to the cell | 102 |

Fig. 2

Client          Data collection server          RNC          Base station 2

                                                                Mobile station

Base station 1

Fig. 3

| Mobile station | Base station 1/Base station 2 | RNC | Data collection server | Client |

301.issuing an RTT measurement instruction

302.sending an RTT signal

303.returning the RTT measurement data

304.calculating RTT data

305.reporting the RTT data

306.recording the RTT data

307.downloading the RTT data file

308.processing, calculating, performing the statistics to the data, and storing

309.querying, calculating, and displaying the soft switching band of the cell

Fig. 4

Fig. 5

Fig. 6

X<0.1%

0.1%<-X<0.2%

0.2%<=X<0.5%

0.5%<-X<1%

1%<=X<2%

X>=2%

Fig. 7

Fig.8

Fig.9

Fig.10

Fig. 11

# INTERNATIONAL SEARCH REPORT

| International application No. |
| --- |
| **PCT/CN2015/072790** |

### A. CLASSIFICATION OF SUBJECT MATTER

H04W 24/10 (2009.01) i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, CNABS, CNKI: soft switch, round trip time, positioning, grid

VEN: soft switch, RTT, positioning, grid

### C. DOCUMENTS CONSIDERED TO BE RELEVANT

| Category* | Citation of document, with indication, where appropriate, of the relevant passages | Relevant to claim No. |
| --- | --- | --- |
| Y | CN 1856161 A (HUAWEI TECHNOLOGIES CO., LTD.), 01 November 2006 (01.11.2006), description, page 4, line 13 to page 5, line 4 | 1-11 |
| Y | CN 103916868 A (CHINA MOBILE GROUP ZHEJIANG LIMITED COMPANY), 09 July 2014 (09.07.2014), claims 1-2 | 1-11 |
| A | CN 1536850 A (NANJING BRANCH OF ZTE CORPORATION), 13 October 2004(13.10.2004), the whole document | 1-11 |
| A | CN 1489313 A (SHENZHEN ZTE CORP.), 14 April 2004 (14.04.2004), the whole document | 1-11 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 April 2015 (23.04.2015) | **08 May 2015 (08.05.2015)** |
| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Xiaopeng** Telephone No.: (86-10) **62412002** |

Form PCT/ISA/210 (second sheet) (July 2009)

## INTERNATIONAL SEARCH REPORT
Information on patent family members

International application No.

**PCT/CN2015/072790**

| Patent Documents referred in the Report | Publication Date | Patent Family | Publication Date |
|---|---|---|---|
| CN 1856161 A | 01 November 2006 | None | |
| CN 103916868 A | 09 July 2014 | None | |
| CN 1536850 A | 13 October 2004 | None | |
| CN 1489313 A | 14 April 2004 | CN 100336326 C | 05 September 2007 |

Form PCT/ISA/210 (patent family annex) (July 2009)